(19) Europäisches Patentamt

European Patent Office

Office européen des brevets

(11) **EP 1 104 881 B1**

(12) **EUROPEAN PATENT SPECIFICATION**

(45) Date of publication and mention
of the grant of the patent:
**23.04.2003 Bulletin 2003/17**

(51) Int Cl.⁷: **G01D 1/00**, G01C 21/00,
H04N 7/18

(21) Application number: **00309485.1**

(22) Date of filing: **27.10.2000**

(54) **Lane hogging prevention system**

Fahrzeugsteuerungssystem

Système de commande de véhicule

(84) Designated Contracting States:
**DE FR GB IT**

(30) Priority: **27.10.1999 JP 30491999**

(43) Date of publication of application:
**06.06.2001 Bulletin 2001/23**

(73) Proprietor: **Director General of National Institute
for Land and Infrastructure Management,
Ministry of Land, Infrastructure and Transport
Tsukuba City, Ibaraki Prefecture 305-0804 (JP)**

(72) Inventors:
 • **Noguchi, Naoya, c/o Ishikawajima-Harima Heavy
 Chiyoda-ku, Tokyo (JP)**
 • **Takiguchi, Akihiko
 Minato-ku, Tokyo (JP)**
 • **Kubota, Koji, c/o Nippon Telegraph and
 Chiyoda-ku, Tokyo (JP)**
 • **Moteki, Satoshi
 Shinagawa-ku, Tokyo (JP)**
 • **Ooya, Harutada,
 c/o Oki Electric Industry Co., Ltd
 Minato-ku, Tokyo (JP)**
 • **Murakami, Hideaki, c/o Omron Corporation
 Higashi Hairu, Shimogyo-ku, Kyoto (JP)**
 • **Yamada, Masaya,
 c/o Sumitomo Electric Ind., Ltd.
 Chuo-ku, Osaka (JP)**
 • **Takahashi, Hiroshi
 Kanagawa-ku, Yokohama-shi, Kanagawa (JP)**

 • **Kuno, Akira
 Kariya-shi, Aichi-ken (JP)**
 • **Ezure, Hisashi
 Kawasaki-shi, Kanagawa-ken (JP)**
 • **Kondo, Tetsuaki
 Chiyoda-ku, Tokyo (JP)**
 • **Matsubara, Ryoji, c/o Hitachi Cable, Ltd.
 Chiyoda-ku, Tokyo (JP)**
 • **Ohira, Yasuyuki, c/o Fujitsu Limited
 Kawasaki-shi, Kanagawa-ken (JP)**
 • **Ohtani, Kenichi,
 c/o The Furukawa Electric Co. Ltd
 Chiyoda-ku, Tokyo (JP)**
 • **Mashimo, Hiroshi
 Minato-ku, Tokyo (JP)**
 • **Inobe, Takao, c/o Matsushita Electric
 Kadoma-shi, Osaka (JP)**
 • **Miyamoto, Kazumasa,
 c/o Mitsubishi Heavy Ind., Ltd
 Chiyoda-ku, Tokyo (JP)**
 • **Kawahara, Kazutaka,
 c/o Mitsubishi Electric Corp.
 Chiyoda-ku, Tokyo (JP)**

(74) Representative: **Tothill, John Paul
 Frank B. Dehn & Co.
 179 Queen Victoria Street
 London EC4V 4EL (GB)**

(56) References cited:
 **EP-A- 0 349 652          DE-A- 3 635 667
 US-A- 5 245 422**

## EP 1 104 881 B1

**Description**

FIELD OF THE INVENTION

The present invention relates to a vehicle such as an AHS (Advanced-cruise-assist Highway System) car which enables a driver to perform accurate steering at a place where recognition of a lane is difficult due to, for instance, rainfall or snowfall, and prevents lane hogging by previously controlling a running speed to a safety level when high speed running is dangerous because of a curve or for other reasons. (Vehicles to which the present invention is applied are described as AHS cars hereinafter.)

BACKGROUND OF THE INVENTION

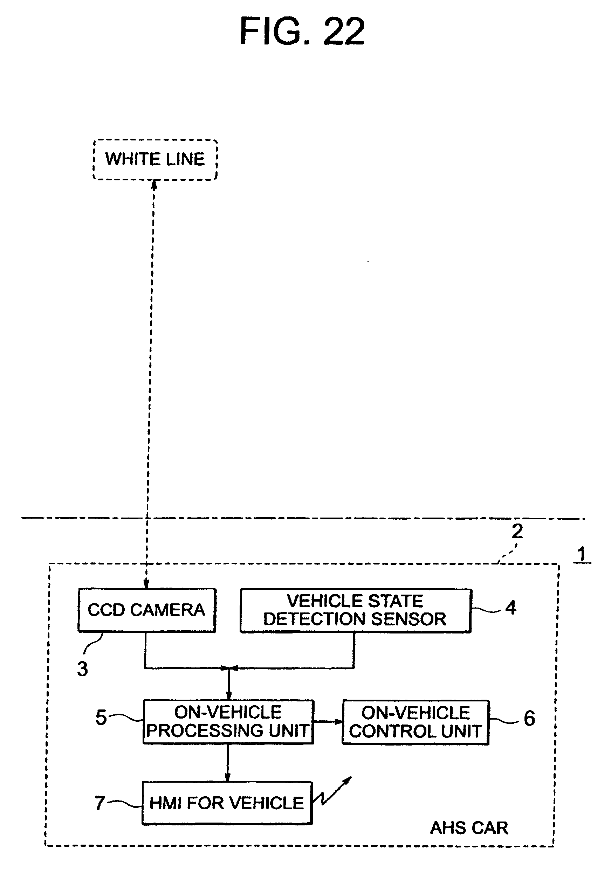

Fig.22 is a block diagram showing general configuration of a general lane hogging prevention system based on the prior art. Namely the conventional type of lane hogging prevention system, which prevents a vehicle running on a road from hogging from a lane (a white line), provides its controls by photographing (detecting) a lane-partitioning line (described as white line hereinafter) with a video camera such as a compact camera provided on the car. Namely a lane hogging prevention system 1 comprises a CCD (Charge-Coupled Device) camera 3 which is a CCD sensor loaded on the vehicle for detecting a white line on a road, a vehicle state detection sensor 4 for detecting a running speed of the AHS car, and an on-vehicle processing unit 5 for processing information sent from the sensors 3 and 4. The reference numeral 6 indicates an on-vehicle control unit, and with this on-vehicle control unit 6, a steering angle of the AHS car is automatically controlled. The reference numeral 7 indicates an HMI (Human Machine Interface) as an alarm device for giving alarms to a driver of the AHS car.

When a white line is detected by the CCD camera 3, an alarm for lane hogging is alerted to the driver from the HMI 7 as an alarm device based on the information from the on-vehicle processing unit 5 integrated with the vehicle state detection sensor 4. Upon reception of this alarm, the driver previously recognizes a position of the AHS car and can evade the possibility of lane hogging from the "white line position".

At a dangerous position such as a curved section or a crossing, a signpost indicating existence of a curve and the necessity of speed reduction is provided in front of the dangerous position, and this visual, and the signpost alerts the driver that it is dangerous to drive a car at a high speed there. When the driver recognizes the signpost, the driver can evade the danger by reducing a running speed of the AHS car. Also there is the system in which a curve or other road surface situation is previously detected by an on-vehicle device now being driven by the driver and the information is given to the driver.

In the case of the conventional type of lane hogging prevention system as described above, a video camera such as a compact CCD camera is used for detection of road surface situation. Therefore, in the case of bad or abnormal weather conditions such as rainfall, snowfall, or a dense fog not preferable for good visibility, good visibility through a front glass is lost, which sometimes makes it impossible to recognize the "white line position", and the driver can not control the car properly. In association with this difficult conditions, it becomes harder for the driver to maintain running on a proper lane, and when lane hogging occurs, it may result in a traffic jam or a traffic accident.

Conventionally regulations on a running speed on a road have been set so that every type of vehicles can safely run on the road, and therefore even if the speed limit is exceeded to some extent, the car can generally continue running without causing any danger, and drivers are apt to be accustomed to the situation in which traffic rules especially concerning a running speed are neglected or drivers may intentionally ignore the traffic rules. Under the circumstances, only with an abstract expression of sharp curve or the like on a signpost, it is difficult for a driver to determine within a short period of time to what extent the running speed should be reduced, or to quickly recognize that the road surface in the curved section is slippery due to freezing or for other reasons. In that case, the vehicle may continue running in the curved section at a dangerously high speed, and thus the sufficient effect of suppressing dangerous run at a curved section can not be achieved, and sometimes a traffic accident occurs due to lane hogging in the worst case. Further in the case where a road line form or a road surface situation is detected by an on-vehicle device, generally good visibility is not provided at a curved section, and it is impossible to acquire accurate information on a road surface situation in the curved section.

EP-A-0349652 discloses an example of a vehicular navigation apparatus for navigating a car in accordance with a predetermined route. DE-A-3635667 discloses a system for determining the operational parameters required to run a transport vehicle in the most economic fashion and for applying the determined parameters. US-A-5245422 discloses an automatic vehicle steering system for maintaining a vehicle in a lane comprising a vehicle mounted sensor for determining the lane markings in front the vehicle.

OBJECT AND SUMMARY OF THE INVENTION

To solve the problems as described above, the invention as described in Claim 1 provides a lane hogging prevention system comprising a vehicle equipped with a vehicle position detection sensor for detecting a position of an AHS car as an on-vehicle device, a vehicle state detection sensor for detecting a running speed, a running distance, and a yoke rate of the AHS car, an on-vehicle processing unit for processing information from the detection sensors, and an on-vehicle control unit for controlling a running speed and a steering angle of the AHS car; and on-road facilities including a plurality of position detection support facilities provided at specified positions within a service area, a road surface detection facility for detecting a road surface situation, a weather conditions detection facility for detecting weather conditions, an on-road database for storing therein road line information such as curvature data indicating curves of the current road, and a road-to-vehicle communications facility for executing communications between the on-road facilities and the vehicle. In the lane hogging prevention system according to the present invention, the vehicle position detection sensor detects a position of the AHS car according to a signal from the position detection support facility, road surface information, weather information, and road line form information processed by the on-road processing facilities are transmitted via the road-to-vehicle communications facility to a road-to-vehicle communications device loaded on the vehicle, and the road surface information, weather information, and road line form information are integrated with information on the vehicle's current position detected by the vehicle position detection sensor as well as with the information concerning a running speed of the vehicle detected by the vehicle state detection sensor. When it is determined based on the integrated information by the on-vehicle processing unit that the vehicle may go out of the current lane, an alarm is given to the driver at a position for starting provision of an alarm, and when the vehicle arrives at a position for starting provision of automatic controls, automatic control is provided so that the running vehicle can be returned to a safe and proper running reference position.

The preferred embodiment of the invention defined in Claim 2 provides a lane hogging prevention system enabling transaction of information and signals between a vehicle and on-road facility in a service area between a service-in position detection facility provided on a straight road away from an entrance for a dangerous section and a service-out position detection support facility provided near the entrance for the dangerous section so that a vehicle running on a road with the section dangerous for high speed running as defined in the invention of Claim 1 can continue running at a proper and safe speed in the dangerous section. In this lane hogging prevention system, the on-load device receives informational signals from the on-road facilities, computes a safe speed for a running speed at a dangerous place corresponding to performance of the AHS car, alerts the driver with the alarm device the necessity of reducing the running speed when the deceleration rate by the driver is insufficient, and when the deceleration rate by the driver is still insufficient after the alert is provided, the running speed is further reduced by the on-vehicle control unit so that the vehicle's running speed will be reduced to a safety level in front of the entrance for the dangerous section.

In the preferred embodiment of the invention defined in Claim 3, the weather condition detection facility as employed in the invention of Claim 1 is provided as a facility for detecting weather information such as information on rainfall, snowfall, wind velocity, and wind direction, and the detected weather information is transmitted at a cycle to the on-road processing facilities. In this system, a substantially central position of a lane is regarded as a reference running position, a running position off from the reference position to the white line is regarded as an alarm starting position, and a running position further closer to the white lane than the alarm starting position is regarded as an automatic control starting position. Because of the feature, even when an AHS car runs under bad (abnormal) weather conditions such as rainfall, snowfall, and generation of a dense fog or when the AHS car runs in a dangerous zone at a relatively high speed, the lane hogging prevention system can provide accurate and proper controls over the AHS car so that the AHS car can always maintain the safe running speed and evade lane hogging.

BRIEF DESCRIPTION OF THE DRAWINGS

Fig. 1 is a block diagram showing general configuration of a lane hogging prevention system according to a first embodiment of the present invention;
Fig. 2 is an explanatory view showing configuration and functions of a straight road section;
Fig. 3 is a time chart for the same functions;
Fig. 4 is an explanatory view showing general configuration of determination method in the lane hogging prevention system;
Fig. 5 is an explanatory view showing details of information on a line form of a road;
Fig. 6 is a processing flow chart for weather information processed by the on-road processing facility;
Fig.7 is a view showing one example of a time chart applied for controls;
Fig. 8 is a block diagram showing one example of installation of the weather conditions detection facility;

Fig. 9 is a block diagram showing one example of installation of the position detection support facility (for service-in/service-out);

Fig. 10 is a block diagram showing one example of installation of the position detection support facility (for detecting a running position of the AHS car);

Fig. 11 is a block diagram showing one example of installation of the road-to-vehicle communications facility;

Fig. 12 is a block diagram showing one example of installation or the on-road facilities and a range of management thereby;

Fig. 13 is a block diagram showing general configuration of a second embodiment of the present invention;

Fig. 14 is a view showing a section of a road for description of a scenario in the second embodiment of the present invention;

Fig. 15 is an explanatory view showing a scenario in the lane hogging prevention system according to the present invention;

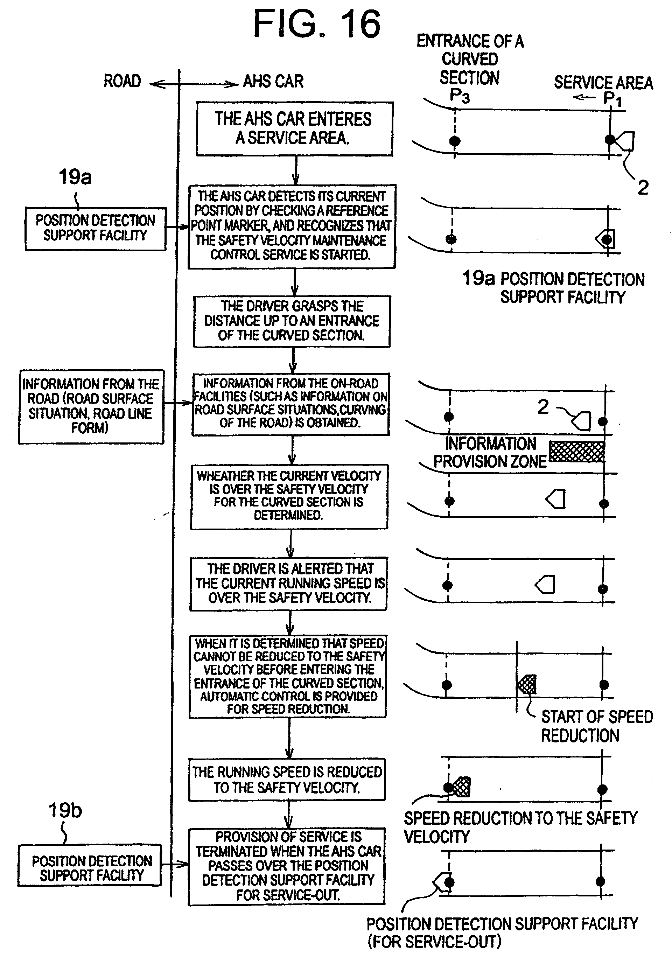

Fig. 16 is an explanatory view for an alarm and determi-nation method for maintaining a safe running speed at a curved section of a road;

Fig. 17 is a time chart showing processing by the on-road facilities;

Fig. 18 is a processing flow 1 for the on-road processing facility;

Fig. 19 is a processing flow 2 for the on-road processing facility;

Fig. 20 is a view showing arrangement of facilities at a "curved section of an ordinary road" for maintaining a safe running speed at the curved section;

Fig. 21 is a view showing arrangement of facilities at a "curved section of a vehicle-dedicated road" for maintaining a safe running speed at the section; and

Fig. 22 is a block diagram showing general configuration of the conventional type of lane hogging prevention system.

## DETAILED DESCRIPTION OF THE PREFERRED EMBODIMENTS

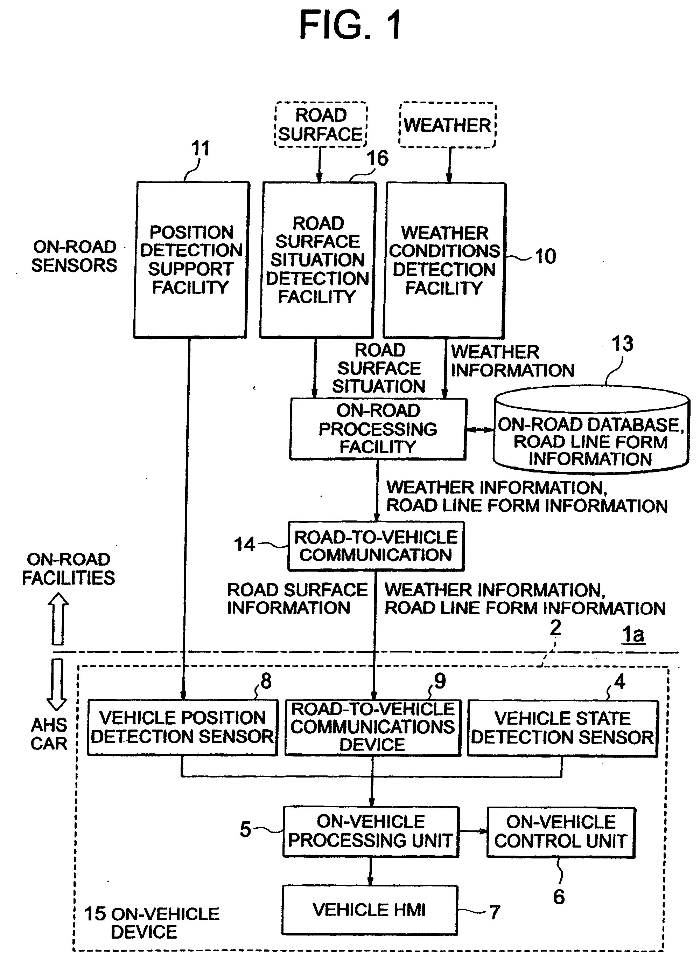

Fig. 1 is a block diagram showing general configuration of the lane hogging prevention system according to one embodiment of the present invention. Although a number of each device and facility is one respectively in Fig. 1, a plurality of the devices and facilities may be provided according to a range for monitoring by each device or facility. Input/output data in the figure is only information data as a basis in the present invention. The first embodiment of the present invention is described in detail below with reference to the general block diagram in Fig. 1. The present invention is characterized in that weather information is utilized, a running position of the AHS car is always monitored by checking signals from a plurality of position detection facilities provided on the road, and an alarm is given to the vehicle's driver with controls for automatic steering provided to prevent lane hogging. For the purpose described above, an AHS car 2 constituting a lane hogging prevention system 1a has a vehicle position detection sensor 8 for detecting a position of the AHS car, a vehicle state detection sensor 4 for detecting a running speed of the AHS car, and an on-vehicle processing unit 5 for processing information outputted from the sensors 4 and 8 each as an on-vehicle device 15. The vehicle position detection sensor 8 detects a position of the AHS car based on information from a position detection support facility 11 described later. The on-vehicle processing device 5 determines the possibility of lane hogging based on the received weather information, road line form information as well as that on a position and a running speed of the AHS car. The reference numeral 6 indicates an on-vehicle control unit, and this on-vehicle provides controls for steering according to controls and instructions from the on-vehicle processing unit. The reference numeral 7 is an HMI (Human Machine Interface) for providing various types of information and alarms to a driver of the AHS car.

On the other hand, the on-road facilities according to the present invention include a plurality of position detection support facilities 11, a weather conditions detection facility 10 capable of detecting weather conditions on the road, a road surface situation detection facility 16 capable of detecting road surface conditions such as fallen snow, freezing, humidity, and dryness, an on-road processing facility 12, an on-road database 13 for storing therein road line information on the road on which the AHS car is currently running, and a road-to-vehicle communications facility 14 capable of communicating the information on road surface situation detected by each of the facilities, weather information, and road line form information to the AHS car. Weather conditions such as rainfall, snowfall, a wind velocity, and a wind direction can be detected by the weather conditions detection facility 10, and the weather conditions detection facility 10 can detect the "wind direction" in various directions (for instance, 6 directions) around the installed position. The reference numeral 11 indicates a plurality of position detection support facilities provided on a road for supporting detection of a position of the running AHS car, and the vehicle position detection sensor 8 provided on both sides of a road can detect a position of the AHS car according to signals sent from the position detection support facilities 11. The position detection support facility 11 functions also for detection of service-in/service-out within a service area as described later. The on-road processing facility 12 functions also as a running support information preparation facility, and mainly executes such operations as preparation of data or computing, and weather information is delivered from the weather detection facility 10 to this on-road processing facility 12.

The reference numeral 13 indicates an on-road database, and the on-road database 13 stores therein road line form information, and information delivery be executed between the on-road database facility 13 and the on-road processing facility 12. The road line form information can also be stored in a navigation system loaded on the AHS car 2, and the information can be used together with the information provided from the on-road facilities. The weather information and road line form information detected by each of the facilities 10 and 13 is directly delivered via the road-to-vehicle communications facility 14 to the road-to-vehicle communications facility 9 on the AHS car 2.

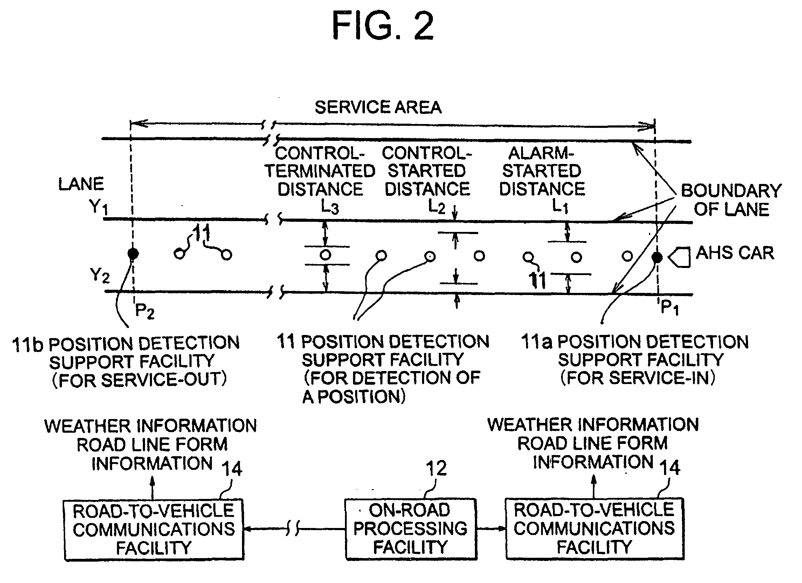

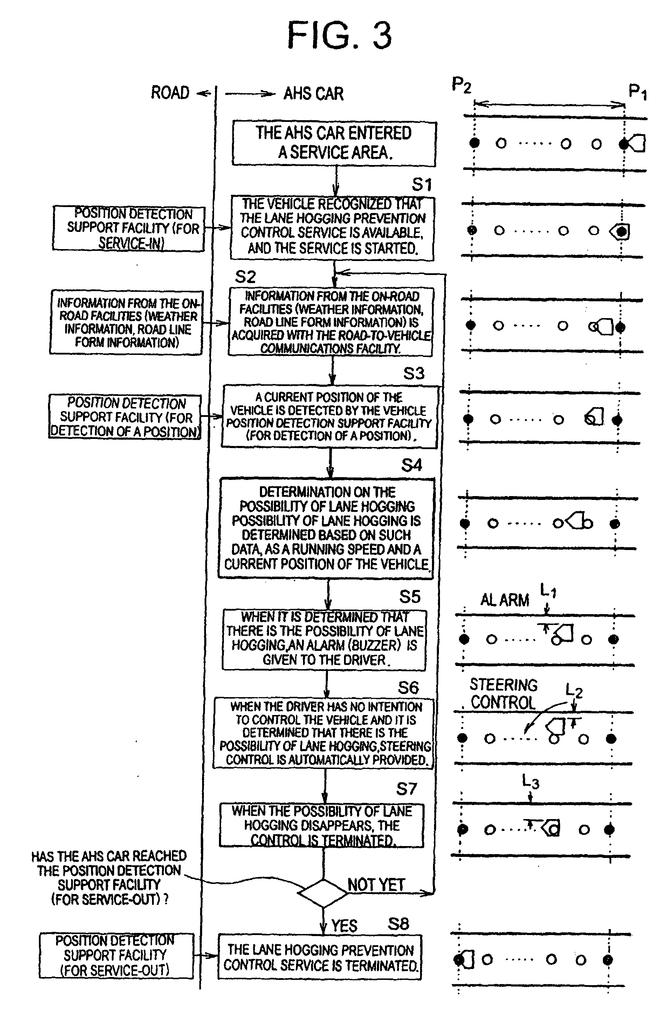

Embodiments of the present invention are described with reference to Fig. 2 and Fig. 3. These figures show a straight section of a vehicle-dedicated road as an example of a section to which the present invention is applied. This straight section consists of two lanes (lane $Y_1$, lane $Y_2$) on one way, and three partition lines are provided each between the lanes. Also it is assumed herein that the weather conditions detection facility 10 (Refer to Fig. 1) is provided for every 500 m (total data rate: For 10 zones = 10 Km), and one information is outputted for each installation range. Further the "service area" as defined herein indicates a specified road range in which the lane hogging prevention system can function.

As shown in Fig. 2, a plurality of the position detection support facilities are provided at an even space in a service area on a road, and the position detection support facility 11a at the point $P_1$ functions for detection of service, while the position detection support facility 11b at the point $P_2$ functions for service-out. Other position detection facilities 11 function for detection of a position of a running vehicle. Each of the position detection support facilities 11 is provided at a substantially central position, and the on-road processing facilities 12 are provided around the position detection support facility 11. Actually lane markers may be used as the position detection support facilities 11, 11a, and 11b.

As shown in Fig. 3, the AHS car 2 having entered a service area recognizes that provision of service by the position detection support facility 11a at the point $P_1$ is started, and at the same time provision of the lane hogging prevention function (service) is started (S1). When provision of the lane hogging prevention service is started, weather information and information on road surface situation from the weather conditions detection facility 10 and the road surface situation detection facility 16, and road line form information from the on-road database are delivered via the road-to-vehicle communications facility 14 to the AHS car 2 (S2). Each time the AHS car 2 passes over each of the plurality of position detection support facilities 11, the detection information is inputted to the vehicle position detection sensor 8, thus a position of the running AHS car 2 being grasped (S3). As described above, the AHS car executes "determination for prevention of lane hogging" for a constantly-varying current position of the vehicle based on the information obtained from the on-road facilities as well as on information on the vehicle's state including the running speed and the yoke rate (S4).

Namely in the present invention, a running position of a vehicle at a substantially central position of a road on which the vehicle is currently running is regarded as a proper running reference position (Refer to Fig. 2), a running position off from the reference position to a white line is regarded as an alarm starting position (distance $L_1$), and a running position further closer to the white line than this reference position is regarded as a control starting position (distance $L_2$), and when it is determined by the on-vehicle processing unit 5 that the running AHS car 2 may go out of the lane, an alarm is given to the AHS car at the alarm starting position (distance $L_1$), and then when the AHS car comes to the control starting position (distance $L_2$), automatic control is provided until the running AHS car is returned to the proper reference running position (distance $L_3$).

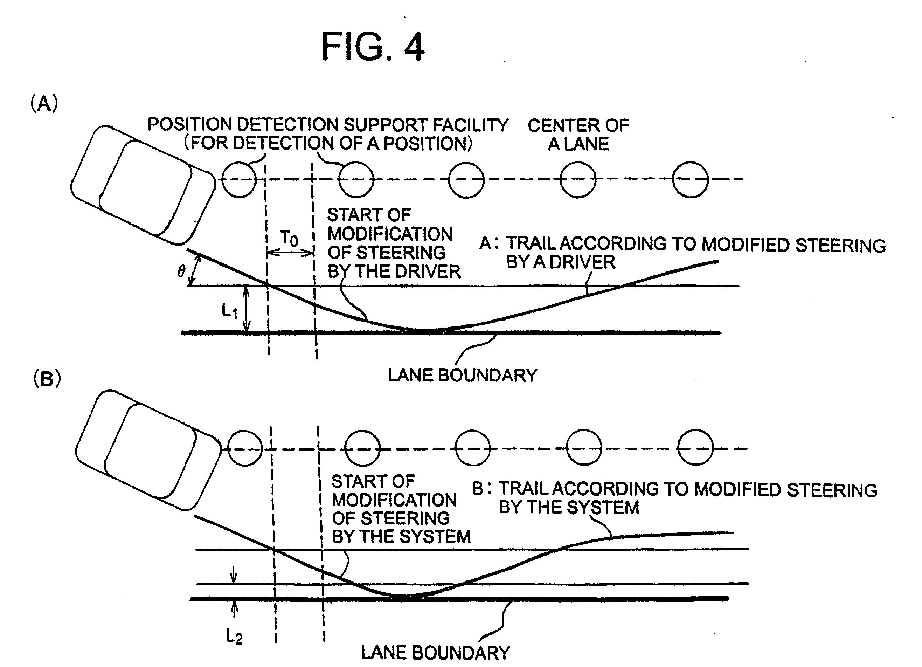

To describe the operation sequence in greater detail with reference to Fig. 3, when it is determined that "the running AHS car may go out of the lane", an alarm is given by a buzzer or the like at the alarm starting position (distance $L_1$) (S5). In this step, when a steering operation (manual operation for steering) by the driver is inappropriate and "there is the possibility of lane hogging", the manual operation mode for steering by the driver is switched to the automatic driving mode, and automatic control is executed by the on-vehicle control unit 6 to return the running AHS car to the proper running reference position (S6). Namely the distance $L_2$ up to the control starting position is the outermost point for prevention of lane hogging, and the automatic control is terminated at the point of time when the AHS car has returned to the proper running reference position (control end distance $L_3$) (S7). When the AHS car passes over the final position detection support facility 11b (service-out), the sequence of operations provided by the service system comes to the end (S8). It is to be noted that, as a range of the service area may vary according to conditions of each road, arrangement of the position detection support facilities for service-in and service-out must be examined for each site by taking into account a form of the road to which the present invention is applied. It is assumed herein that the lane hogging prevention system according to the present invention can function and provide its services only when it is determined that the running AHS car may go out of the lane, and that the manual steering mode is effected during its normal run. Figs. 4(A) and 4(B) are explanatory views each showing one example of the determination method applied to the "lane hogging prevention system" described above. In the figures, the curve A indicates a trail of the AHS car 2 when the driver's operation for steering is properly modified after an alarm is given to the driver, while the curve B indicates a trail when the driver's steering operation is not modified even after the alarm is given to the driver and automatic control is executed by the on-vehicle control unit 6. Namely the AHS car grasps its current position with the position detection support facility and computes a distance from a center of the lane. Then the "distance $L_1$" and "distance $L_2$" from a boundary of the lane are computed based on the road line form information as well as the distance from a center of the lane. When the AHS car is about to go out of the lane at the yoke angle θ (running inclination angle), an alarm is given to the driver asking the driver to perform proper steering operations after passage of the idle running time $T_0$, and when the distance from the AHS car to the lane boundary is equal to the distance $L_1$, an alarm is given to the driver again. When the driver's steering operation is not modified even after passage of the idle running time $T_0$ and the distance from the AHS car to the lane boundary is equal to the distance $L_2$, automatic control is provided by the on-vehicle control unit 6 (Refer to Fig. 1) to return the AHS car to the proper position.

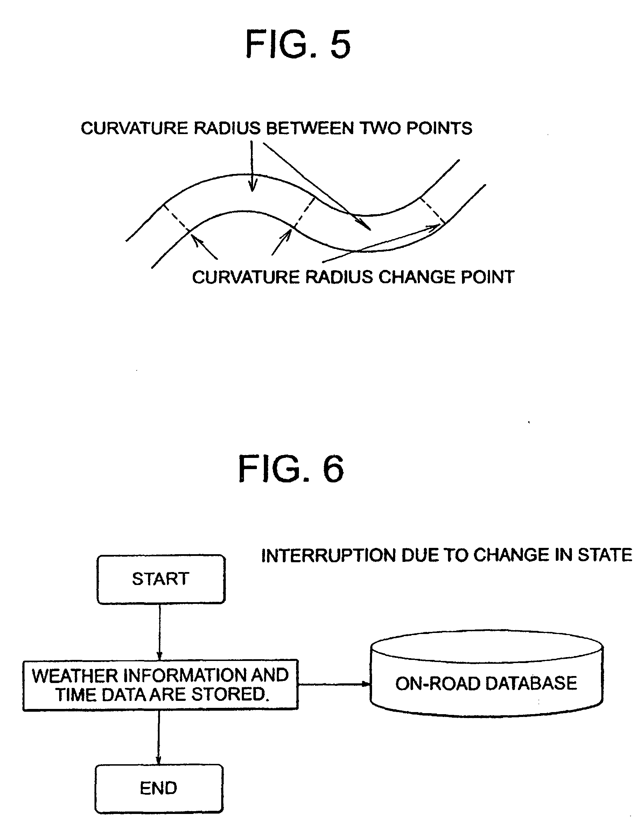

Fig. 5 shows details of the "data rate of road line form information". Namely in the road line form information, a curvature of a road is defined as a curvature radius between two changing points (positions) at each of which the curvature radius changes within a unit zone (1 Km), and at maximum three curvature changing points are specified within the unit zone. This provision is introduced by taking into considerations the case where there are two sections curving at least the minimum curvature radius (500R) and at about 45° within one unit zone.

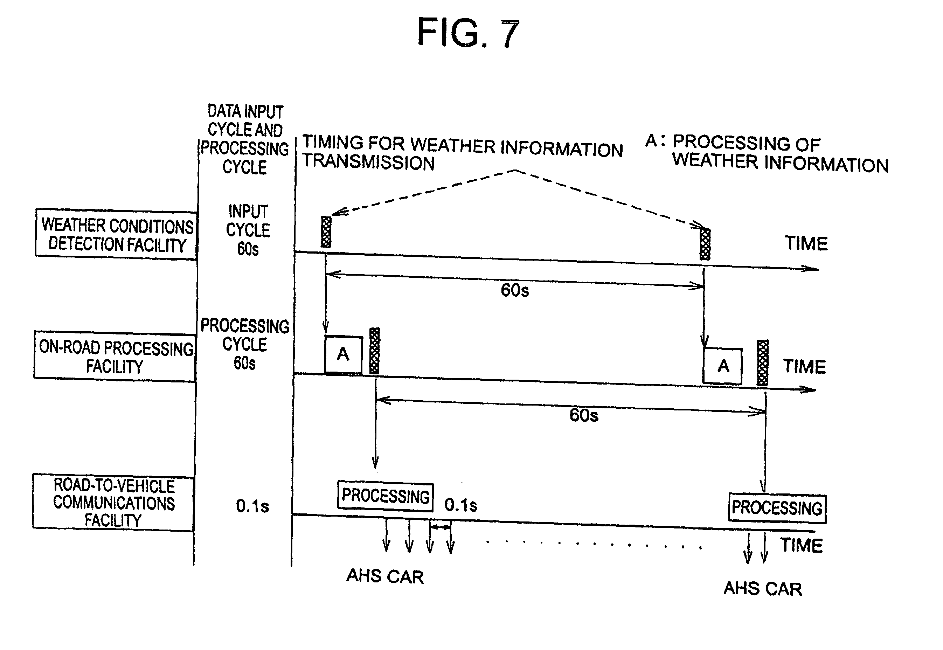

Fig. 7 shows one example of the time chart applied for controls according to the present invention. Namely basic contents of the input information in the present invention is weather information concerning rainfall, snowfall, detected wind velocity and wind directions, and the like. As shown in this time chart, the weather information detected by the weather conditions detection facility 10 (shown in Fig. 1) specific information transmitted at the cycle of 60 seconds to the on-road processing facility 12, and the on-road processing facility 12 stores the received weather information in its database, and transmits the weather information to the road-to-vehicle communications facility 14 each time. The road-to-vehicle communications facility 14 stores the received information in a buffer, and the information stored in the buffer is transmitted once for every 0.1 second to each AHS car. "A" in the figure shows the processing of weather information, and the "weather information processing" is performed by the on-road processing device 12 at the timing when transmission is made from the weather conditions detection facility 10.

Fig. 6 shows the "processing flow" for the weather conditions processed by the on-road processing facility shown in Fig. 2 above, and more specifically this figure shows the "processing flow" when interruption is made due to change in the weather conditions. As shown in Fig. 7, simultaneously when the "processing flow" is started, "information on the weather conditions and data on the monitoring time are stored", and information on the weather conditions detected by the on-road processing facility 12 and data on the detected time are stored in the on-road database 13 respectively.

A list of "input data" from the on-road processing facility 12 according to the present invention is shown in Table 1 below. As shown in Table 1, a large item for the data is based on the weather information, and the "input source" is the weather conditions detection facility 10, thus information concerning rainfall, snowfall, a wind velocity, and wind directions (16 directions) are used as the main "input data". More specifically data on a wind velocity and a wind direction (any of the 16 directions) on the lane $Y_1$, and a wind velocity and a wind direction on the line $Y_2$ are inputted at the cycle of 60 seconds.

Table 1

| Data | | Data rate | Input source | Precision | Input cycle |
|---|---|---|---|---|---|
| Large item | Details | | | | |
| Weather Conditions | Wind direction on the lane $Y_1$ | 40 Up and down lanes for 10 zones once for every 500 m | Weather conditions detection facility | 10 directions | 60 s |
| | Wind velocity on the lane $Y_1$ | 40 | Weather conditions detection facility | m/s | 60 s |
| | Wind direction on the lane $Y_2$ | 40 | Weather conditions detection facility | 16 directions | 60 s |
| | Wind velocity on the lane $Y_2$ | 40 | Weather conditions detection facility | m/s | 60 s |

A list of main "output data" in the weather information and road line form information transmitted from the road-to-vehicle communications facility 14 as an on-road infrastructure facility to the AHS vehicle is shown in Table 2 below

Table 2

| Data | | Data rate | Input source | Precision | Input cycle |
|---|---|---|---|---|---|
| Large item | Detail | | | | |
| Weather information | Wind direction on lane $Y_1$ | 40 Up and down lanes for 10 zones for every 500 m | Road-to-vehicle communications facility | 16 directions | 60 s |
| | Wind velocity on lane $Y_1$ | 40 | Road-to-vehicle communications facility | m/s | 60 s |
| | Wind direction on lane $Y_2$ | 40 | Road-to-vehicle communications facility | 16 directions | 60 s |
| | Wind velocity on lane $Y_2$ | 40 | Road-to-vehicle communications facility | m/s | 60 s |
| Road line form information | Position at which the curvature radius of the lane $Y_1$ changes | 60 Up and down lanes for 10 zones with 3 points per zone | Road-to-vehicle communications facility | - | When up dated |
| | Curvature radius at each change point for the lane $Y_1$ | 80 Up and down lanes for 10 zones with 4 points in each zone | Road-to-vehicle communications facility | - | When up dated |
| | Average lane width of lane $Y_1$ | 20 Up and down lanes for 10 zones with one point in each zone | Road-to-vehicle communications facility | - | When up dated |
| | Position at which the curvature radius of the lane $Y_2$ changes | 60 | Road-to-vehicle communications facility | - | When up dated |
| | Curvature radius at each change point for the lane $Y_2$ | 80 | Road-to-vehicle communications facility | - | When up dated |
| | Average lane width of lane $Y_2$ | 20 | Road-to-vehicle communications facility | - | When up dated |

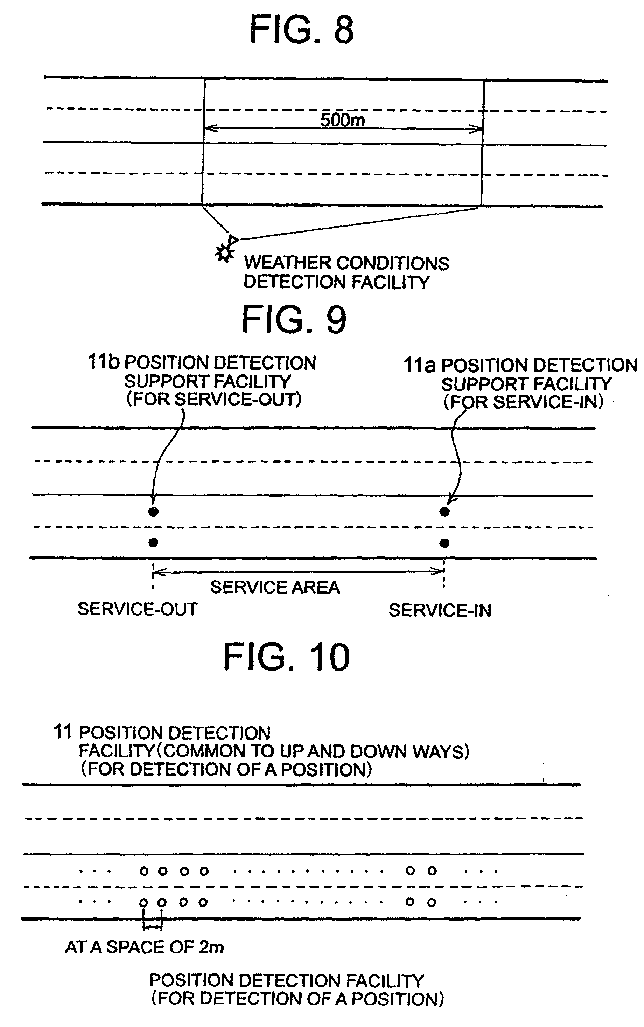

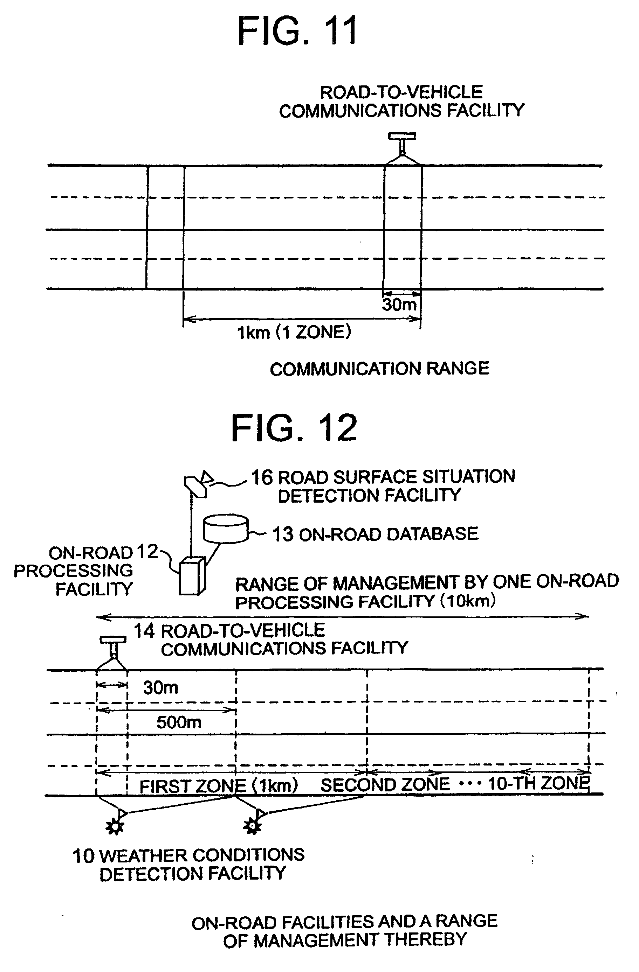

As the inventor of the present invention specifies "a single-way section of a vehicle-dedicated road or an ordinary road" as an object for the present invention, and herein the case of "a single-way straight and ordinary section of a vehicle-dedicated road" is examined as an example thereof, and facility configuration for the "single-way straight and ordinary section of a vehicle-dedicated road" is discussed below. The facility configuration is described in detail below with reference to Fig. 8 to Fig. 11. Further Fig. 12 is a block diagram showing configuration of the on-road infrastructure facility as well as of a management range thereby. Fig. 8 shows an example of installation of the weather conditions detection facility 10. Fig. 9 shows an example of installation of the weather conditions detection facility 10 to which the management range of 500 m is applicable.

Fig. 9 shows one example of installation of the position detection support facilities 11a, 11b for service-in/out in a service area. As shown in Fig. 9, the position detection support facilities 11a, 11b for service-in/out are provided on each lane respectively (4 positions in all). Fig. 10 shows one example of the position detection support facilities 11, 11 for detecting a running position of the AHS car. In this example, the plurality of position detection support facilities 11 are provided at a substantially central position of each lane with an even space (2m). Fig. 11 shows one example of the road-to-vehicle communications facility 14. As shown in Fig. 11, one road-to-vehicle communications facility is provided in every zone (1 Km along the length of the road) so that communications can be performed within the range of "30 m" (across the road). Fig. 12 shows one example of installation of the on-road facilities as shown in Fig. 8 to Fig. 11 and a range of management thereby. As shown in Fig. 12, the weather conditions detection facility 10, on-road database 13, and road-to-vehicle communications facility 14 are provided at specified positions respectively with the on-road processing facility 12 as a basement so that each of the facilities can effectively function.

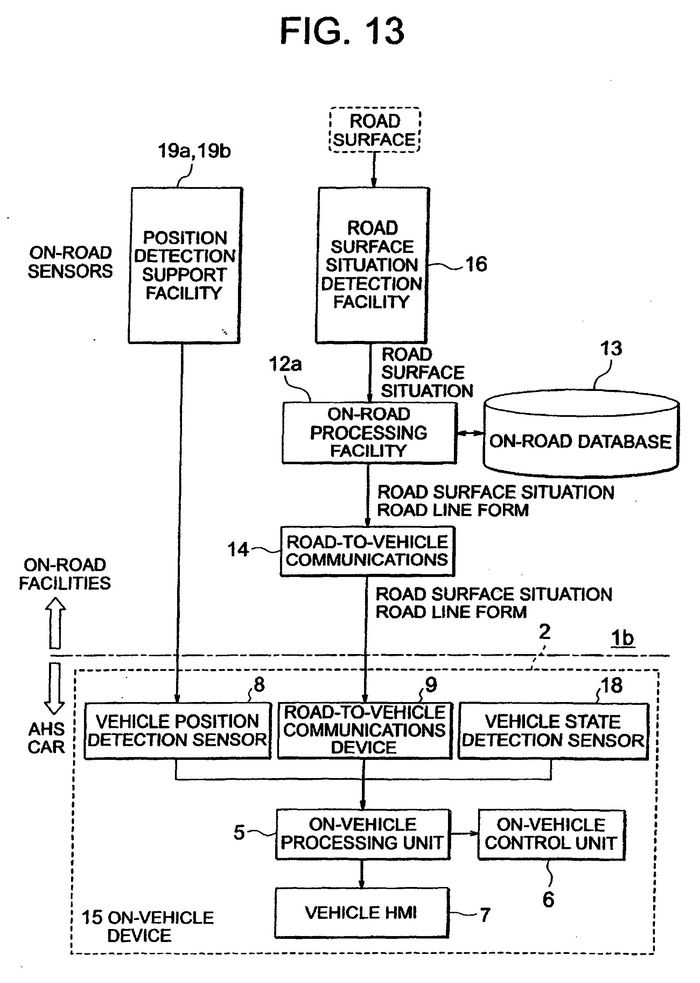

A second embodiment of the present invention is described below with reference to the related drawings. Namely, as shown in Fig. 13, the on-road facilities include the position detection support facilities 19a, 19b at two positions, and the road surface condition detection facility 16 each as an on-road sensor, and further include the on-road processing facility 12a, on-road database 13, and road-to-vehicle communications facility 14. The position detection support facilities 19a, 19b are facilities used in a pair with the vehicle position detection sensor 8 loaded on the AHS car 2 respectively, and of these the position detection support facility 19a is provided on a straight road at a point by a specified distance away from an entrance of a curve regarded as dangerous for running at a relatively high speed, and this facility supports detection of a position of the AHS car as an object for provision of services by the lane hogging prevention system according to the present invention on the road, and provides positional information such as a distance up to the curve. As described later, with this system, it is possible to determine a position of service-in, whether the service is being provided, and a distance up to an entrance of a curved section. The road surface condition detection facility 16 detects road conditions such as rainfall, snowfall, humidity, and dryness. The on-road processing facility 12 is a computing/processing unit as a main facility as an on-road facility for this service by the lane hogging prevention system according to the present invention, receives information on road surface conditions from the road surface condition detection facility 16 and road line form information from the on-road database 13, and outputs the information to the road-to-vehicle communications facility 14 to be transmitted to each vehicle. The on-road database 13 can store therein various types of information such as a form and a curvature radius of a curve and data on inclination each as road line form information. The road-to-vehicle communications facility 14 executes radio communications with the road-to-vehicle communications facility 9 loaded on the AHS car.

On the other hand, the on-vehicle devices 15 loaded on the AHS car include, like in the first embodiment, in addition to the vehicle position detection sensor 8 and the road-to-vehicle communications facility 9, the vehicle state detection sensor 18, and the on-vehicle processing unit 5, and each of the on-vehicle devices 15 has the functions as described below respectively. Namely the vehicle position detection sensor 8 determines a running position of the AHS car (a distance up to an entrance of the curve), a point for service-in, and whether the service by the lane hogging prevention system is being provided or not. The vehicle state detection sensor 18 detects a running speed of the AHS car or the like. The on-vehicle processing unit 5 (including the computing/processing unit) computes a safe running speed based on the information concerning the road surface condition and road line form. The on-vehicle processing unit further determines based on a current position as well as a current running speed of the AHS car whether a running speed of the AHS car has been reduced to a safety level, and generates an instruction for speed reduction according to the necessity.

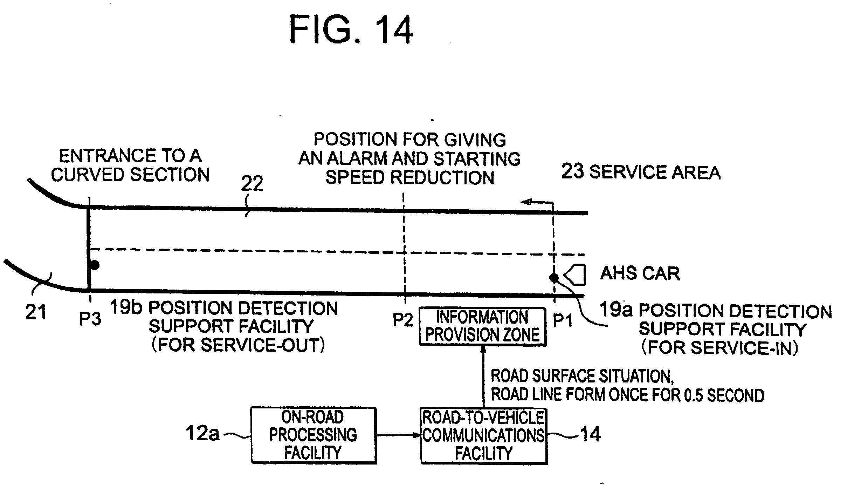

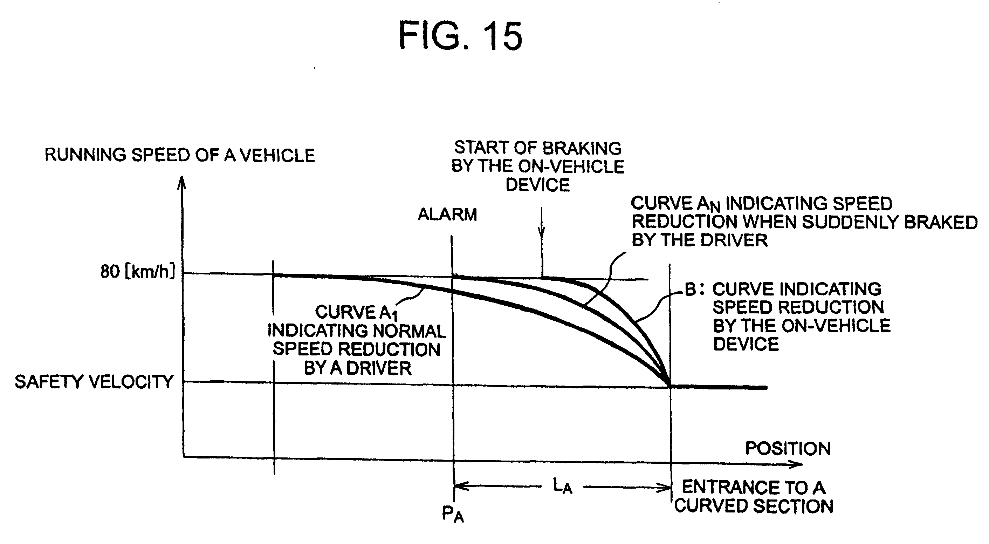

A scenario in the second embodiment is described below with reference to Fig. 14. Fig. 14 shows a curved section 21 and a straight section 22 in front of the curved section 21 as a representative section to which the lane hogging prevention system according to the present invention can effectively be applied. As the scenario, the operation sequence of the system is described below for a case where the AHS car 2 as an object for provision of the services by the lane hogging prevention system according to the present invention enters a service area 23 between the position detection support facility 19a (service-in) and the position detection support facility 19b (service-out) and the AHS car may not reduce its running speed to a safety level until it comes to an entrance of a curved section. The description is made centering on alarms and controls provided by the lane hogging prevention system according to the present invention up to a point of time when the AHS car leaves the service area. The AHS car having entered the service area 23 shown in Fig. 2 at the point $P_1$ recognized that the service for maintenance of a safe running speed in the curved section is available, and grasps a running position of the AHS car and a distance up to an entrance of the curved section. Further the AHS car obtains information on surface conditions of the forward road from the on-road facilities. The line surface condition information and road line surface information such as a curvature radius are broadcast at a prespecified cycle (typically 0.5 second) from the road-to-vehicle communications facility 14. The on-vehicle processing unit 5 loaded on the AHS car computes a required safe running speed from such information as a current running speed and a current position of the AHS car, a distance up to an entrance of the curved section, and road line form information such as a curvature radius, and determines whether the AHS car can reduce the running speed to the safety level before entering the curved section. When it is determined that the AHS car can not reduce its running speed to the safety level before entering the curved section, an alarm (such as a buzzer) is given at the point $P_2$ (which

depends on such factors as a running speed and road surface conditions) to the driver to instruct the driver to reduce the running speed to the required safety level before passing over the point $P_3$ in front of the entrance of the curved section. When it is determined that a speed reduction rate performed by the driver is insufficient, the on-vehicle control unit 6 automatically reduces a running speed of the AHS car so that the running speed is reduced to the safety level before passing over the point $P_3$ in front of the entrance of the curved section. When the AHS car passes by the position detection support facility 19b for indicating service-out provided at the point $P_3$ at an entrance of the curved section, provision of the service in the curved section is terminated. The scenario of the services provided by the "safety speed maintenance system for running in a curved section" in the lane hogging prevention system shown in Fig. 15 is as described above.

The presumptions and supplemental matters in the system according to the second embodiment of the present invention are as described below.

(1) It is assumed therein that the road surface situation does not change from the point of time when the AHS car enters the service area until the AHS car goes out of the curved section. No consideration is made for rapid changes (such as water spreading from a car running ahead) in the road surface other than those caused by ordinary natural phenomena.
(2) A difference in a curvature does not give any substantial effect over the basic functions of the present invention.
(3) In a section where a plurality of curves occur in succession, it is necessary to assume different service areas corresponding to the curved sections respectively.

An example of the method of determining whether a running speed of the AHS car exceeds the required safety level in the second embodiment with reference to Fig. 15. In Fig. 15, the curve $A_1$ is a speed-position curve indicating a case where a driver reduces a running speed of the AHS car to the safety level before entering the entrance of the curved section. The curve $A_N$ indicates a speed-position curve when the driver suddenly brakes in an emergency. The curve B is a speed-position curve indicating a case where a running speed of the AHS car is forcefully reduced by the on-vehicle device 15. It is assumed herein that the AHS car 2 is currently running at the speed of 80 Km/h. The on-vehicle processing unit 5 loaded on the AHS car 2 always monitors a current running speed of the AHS car, and determines whether the AHS car can reduce its running speed to the safety level before entering the curved section. In the case shown in Fig. 15, when the AHS car passes over the point $P_A$ at the speed higher than the required safety speed, it is determined that the AHS car can not reduce its running speed to the safety level before entering an entrance of the curved section, and an alarm is given to the driver. When it is determined that the speed reduction rate in association with the driver's braking operation specific information insufficient, controls are provided by the on-vehicle control device 6 to forcefully reduce a running speed of the AHS car.

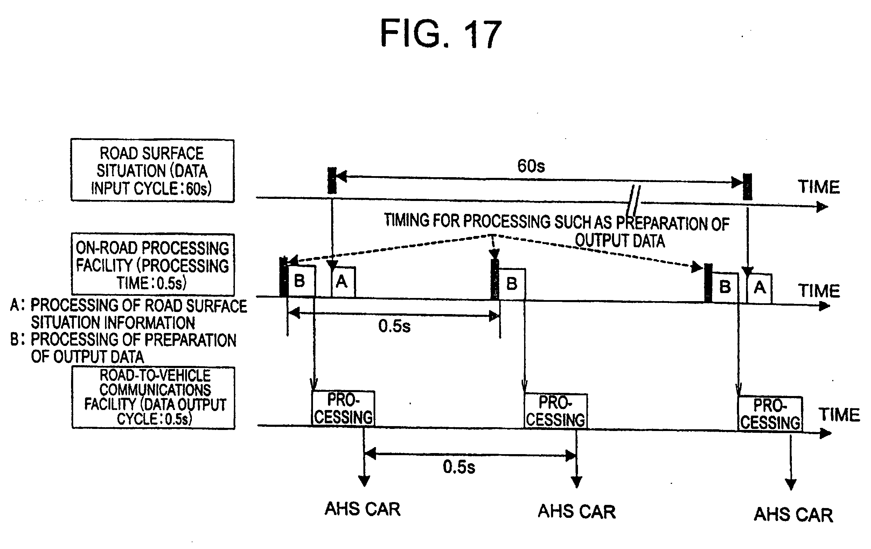

Fig. 17 shows a time chart for the processing by the on-road facilities in this system. As shown in Fig. 17, input information in this system is road line form information and that concerning road surface situation, and this information concerning road surface situations is acquired once for every 60 seconds from the road surface situation detection facility 16 and is stored in the on-road database 13, and further the on-road processing facility 12a prepares the information to be transmitted to the AHS car once for every 0.5 second. Details of the information transmitted to the AHS car 2 are described later in relation to input and output in this system. This time chart is common to both ordinary roads and vehicle-dedicated roads.

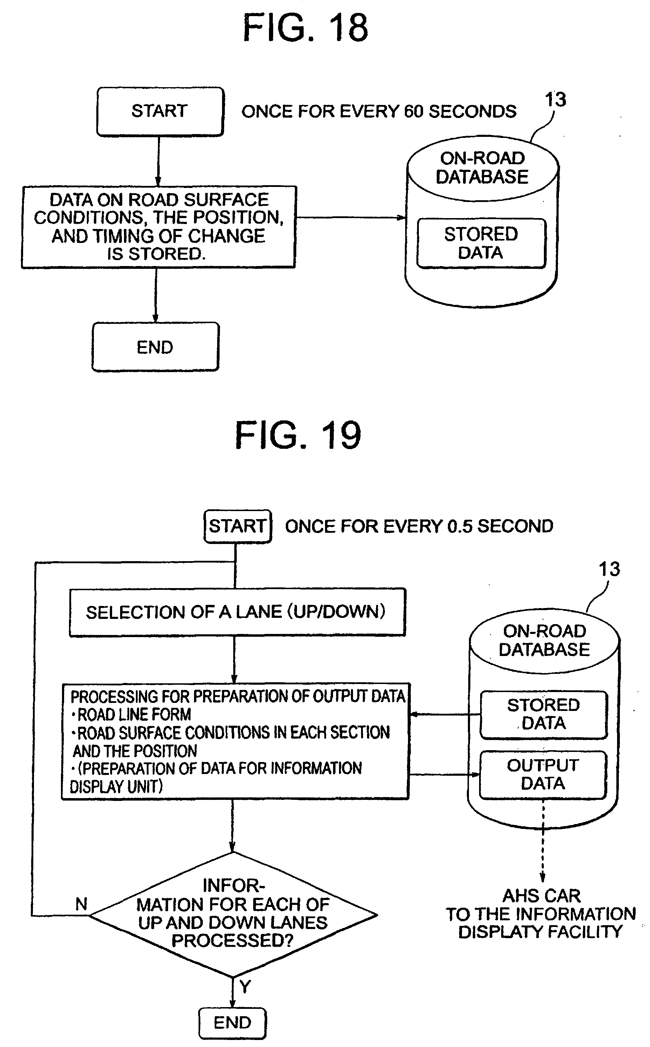

Fig. 18 and Fig. 19 are flow charts each for the processing executed by the on-road processing facility 12a in dangerous sections such as the curved section shown in Fig. 14. Fig. 18 is a flow of processing the information concerning road surface situation detected by the road surface situation detection facility 16. The road surface situation detection facility 16 is started once for every 60 seconds, and stores information on the road surface situation and data on timing in the on-road database 13. Fig. 19 is a flow for preparation of output data to be transmitted to the AHS car, and this operation sequence is started once for 0.5 second, and the prepared output data is stored once in the on-road database 13. The stored output data is broadcast via the road-to-vehicle communications facility 14 to the AHS car. This processing flow is common to both ordinary roads and vehicle-dedicated roads.

In Fig. 14, the AHS car having entered the service area 23 may obtain information concerning the road surface situation there, before reaching the point $P_2$ as a point for starting speed reduction, from the road-to-vehicle communications facility 14, and for instance, when a running speed of the AHS car is 120 Km/h, the AHS car advances by about 33.3 m per second. Assuming herein that the distance from the point $P_1$ to the point $P_2$ is about 33.3 m and the information output cycle is in the range from 0.5 to 0.9 second, the AHS car can acquire the information within this zone without fail. On the contrary, if it is assumed that the information output cycle is 0.5 second, the distance from the point $P_1$ to the point $P_2$ is required to be at least about 17 m. From this point of view, the information output cycle from the road-to-vehicle communications facility 14 is set to 0.5 second. On the ordinary roads, the AHS car runs at the speed of 80 Km/h, but the information provision zone is fixed to 20 m (or more) for both ordinary roads and vehicle-dedicated roads. As for the communication packet length, even if 1 byte is allocated to one piece of data from the output table, there are 336 (bits) excluding the overhead, and the time required for transmitting the data of about 32 Kbps is only 10.5 (msec), so that any serious problem will not occur.

This system is applied especially to curved sections of ordinary roads and vehicle-dedicated roads, so that applications of this system in "a curved section of an ordinary road" and in "a curved section of a vehicle-dedicated road" are discussed below.

(1) Curved section of an ordinary road

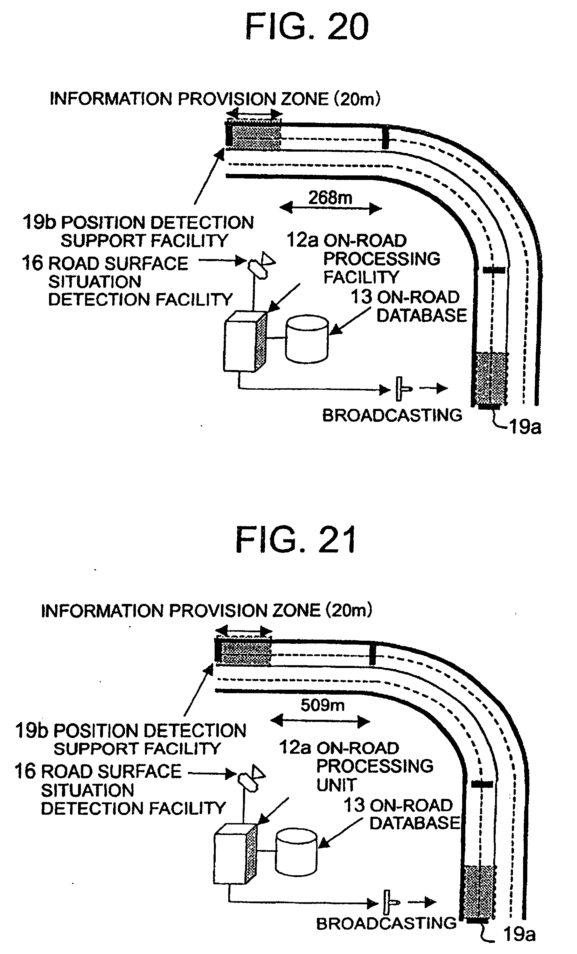

Fig. 20 shows a range of management by the on-road system and on-road facilities each constituting the system.

The safety velocity $V_s$ when running in a curved section and a distance L required for speed reduction to the safety velocity are expressed by Equations 1 and 2 respectively.

The safety velocity $V_s$ and the distance L required for speed reduction to the safety velocity are computed through the following Equation 1:

$$V_s = \sqrt{g \cdot R \cdot f \cdot C} \tag{1}$$

wherein g indicates a gravity acceleration, R indicates a curvature radius of the curve, f indicates a friction coefficient, and c indicates a safety coefficient.

On the other hand, the distance L is computed through the following Equation 2:

$$L = V_A \cdot t_0 - \frac{\alpha \cdot t_1^2}{6} + V_A \cdot t_1 - \frac{V_s^2 - (VA - \frac{\alpha \cdot t_1}{2})^2}{2\alpha} \tag{2}$$

wherein $V_A$ indicates a velocity of the AHS car to be serviced, $t_0$ indicates a idle run time, $t_1$ indicates a time required for speed reduction to a specified level (= 0.5 s), and $\alpha$ indicates a speed reduction degree.

Assuming that $V_A$ = 80 [Km/h], R = 50 [m], f = 0.1, $t_0$ = 0.3 [s], $t_1$ = 0.5 [s], $\alpha$ = 0.1 g [m/s$^2$], and c = 0.5 (assuming a truck), the safety velocity $V_s$ of 18 [Km/h] and the distance L required for speed reduction to a specified level of 268 [m] are obtained through the equation above.

Assuming that $t_0$ = 0.3 [s] and $t_1$ = 0.3 [s], the distance required for automatic speed reduction effected by the on-vehicle control unit 6 is 250 m from in front of the curve.

As shown by the Equations 1 and 2 above, the safety velocity and the distance required for speed reduction according to such factors as a friction coefficient of a road surface, a curvature radius of a curved section, and a velocity of the AHS car to be serviced, so that also it is necessary to arrange the equipment according to such factors. The above-described calculation is a result assuming the most severe conditions, and actually the optimal arrangement suited to conditions at the site is required.

(2) Curved section of a vehicle-dedicated road

Fig. 21 shows a range of management by the on-road system and on-road facilities each constituting the on-road system.

The safety velocity $V_s$ when running in a curved section and a distance L required for speed reduction to the safety velocity are expressed by Equations 3 and 4 respectively.

The safety velocity $V_s$ and the distance L required for speed reduction to the safety velocity are computed through the following Equation 3:

$$V_s = \sqrt{g \cdot R \cdot f \cdot C} \tag{3}$$

wherein g indicates a gravity acceleration, R indicates a curvature radius of the curve, f indicates a friction coefficient, and c indicates a safety coefficient.

On the other hand, the distance L is computed through the following Equation 4:

$$L = V_A \cdot t_0 - \frac{\alpha \cdot t_1^{\,2}}{6} + V_A \cdot t_1 - \frac{V_S^{\,2} - (V_A - \frac{\alpha \cdot t_1}{2})^2}{2\alpha} \qquad (4)$$

wherein $V_A$ indicates a velocity of the AHS car to be serviced, $t_0$ indicates a idle run time, $t_1$ indicates a time required for speed reduction to a specified level = 0.5 [s], and $\alpha$ indicates a speed reduction degree.

Assuming that $V_A$ = 120 [Km/h], R = 400 [m], f = 0.1, $t_0$ = 1 [s], $t_1$ = 0.5 [s], $\alpha$ = 0.1 g [m/s$^2$], and c = 0.5 (assuming a truck), the safety velocity $V_s$ of 50 [Km/h] and the distance L required for speed reduction to a specified level of 509 [m] are obtained through the equation above.

Assuming that $t_0$ = 0.3 [s] and $t_1$ = 0.3 [s], the distance required for automatic speed reduction effected by the on-vehicle control unit 6 is 482 m from in front of the curve.

As shown by the Equations 3 and 4 above, the safety velocity and the distance required for speed reduction according to such factors as a friction coefficient of a road surface, a curvature radius of a curved section, and a velocity of the AHS car to be serviced, so that also it is necessary to arrange the equipment according to such factors. The above-described calculation is a result assuming the most severe conditions, and actually the optimal arrangement suited to conditions at the site is required. The above-described embodiment is a preferable one, and it is needless to say that details of, for instance, the on-road facilities can be modified according to the actual conditions at the site.

As described above, the invention as described in Claim 1 provides a lane hogging prevention system comprising a vehicle having a vehicle position detection sensor loaded on the vehicle for detecting a position of the vehicle, a vehicle position detection sensor for detecting a running speed, a running distance, or a yoke rate of the vehicle, an on-vehicle processing unit for processing the information from each of the detection sensors, an on-vehicle control unit for controlling a running speed of the vehicle and a steering angle, and an alarm device for giving an alarm to a driver of the vehicle; and on-road facilities including a plurality of position detection support facilities provided in a specified service area, a road surface situation detecting facility for detecting a surface situation of a road, a weather conditions detection facility for detecting weather conditions, an on-road database for storing therein road line form information such as curvature data indicating a curved form of the road, and a road-to-vehicle communications facility for executing communications between the on-road processing facility and the vehicle, wherein the vehicle position detection sensor detects a current position of the AHS car according to a signal from the position detection support facility; road surface information, weather information, and road line form information each processed by the on-road processing facility are transmitted via the road-to-vehicle communications facility to the road-to-vehicle communications device loaded on the vehicle; the road surface information, weather information, and road line form information are integrated with the information concerning a current position of the AHS car detected by the vehicle position detection sensor and data on a running speed of the AHS car detected by the vehicle state detection sensor; an alarm is given to a driver of the vehicle at an alarm starting position when it is determined based on the various types of information above by the on-vehicle processing unit that the AHS car may go out of the current lane; and then automatic control is provided, when the AHS car comes to the automatic control starting position so that the AHS car can be returned to a proper running reference position. Because of the features as described above, there is provided the advantage that, as a vehicle can continue to run maintaining a proper lane without causing lane hogging even under bad or abnormal conditions such as rainfall, snowfall, or generation of a dense fog, safety of the vehicle's driver is insured and further a frequency of generation of traffic jams can be reduced by preventing occurrence of traffic accidents.

The invention as described in Claim 2 provides the lane hogging prevention system according to Claim 1 for transacting informational signals with the on-road facilities within a service area between the position detection support facility for service-in installed on a straight road at a position away by a specified distance from an entrance of a dangerous section and the position detection support facility for service-out at a point near the entrance of the dangerous section so that a vehicle running on a road having dangerous sections can continue to run maintaining a safety velocity in the dangerous section, wherein the on-vehicle device receives informational signals from the on-road facilities, computes the safety velocity required for running in the dangerous section and corresponding to performance of the vehicle, alerts the driver the computed safety velocity, gives an alarm with the alarm device, when the speed reduction rate effected by the driver is insufficient, asking the driver to reduce the velocity to the required safety velocity, and further automatically reduces the running speed with the on-vehicle control unit when the speed reduction rate effected by the driver is still insufficient even after generation of the alarm, and provides automatic speed reduction controls to reduce the running speed of the vehicle to the safety velocity before entering the dangerous zone. Because of the features as described above, there is provided the advantage that a frequency of accidents such as lane hogging in a dangerous section can be reduced and as a result traffic accidents and traffic jams associated with traffic accidents can be prevented.

The invention as described in Claim 3 provides the lane hogging prevention system according to Claim 1, wherein said weather conditions detecting facility is a detection facility for detecting weather conditions such as rainfall, snowfall, a wind velocity, and a wind direction, the detected weather information is transmitted at a specified cycle to the on-road processing facility, a running position of a vehicle at a substantially central position of a running lane is regarded as a reference position for running, a running position off from the reference position to a lane-partitioning line (white line) is regarded as an alarm starting position, and a running position further closer to the lane-partitioning line (white line) than this alarm starting position is regarded as an automatic control starting position. Because of the features as described above, there is provided the advantage that safety of the driver is insured and a frequency of generation of traffic jam due to a traffic accident can be reduced.

**Claims**

1. A lane hogging prevention system (1a) **characterized by** comprising a vehicle having a vehicle position detection sensor (8) loaded on the vehicle for detecting a position of the vehicle, a vehicle state detection sensor (4) for detecting a running speed, a running distance, or a yoke rate of the vehicle, an on-vehicle processing unit (5) for processing the information from each of the detection sensors, an on-vehicle control unit (6) for controlling a running speed of the vehicle and a steering angle, and an alarm device (7) for giving an alarm to a driver of the vehicle; and on-road facilities including a plurality of position detection support facilities (11) provided in a specified service area, a road surface situation detecting facility (16) for detecting a surface situation of a road, a weather conditions detection facility (10) for detecting weather conditions, an on-road database (13) for storing therein road line form information such as curvature data indicating a curved form of the road, and a road-to-vehicle communications facility (14) for executing communications between the on-road processing facility and the vehicle, wherein the vehicle position detection sensor (8) detects a current position of the vehicle according to a signal from the position detection support facility (11); road surface information, weather information, and road line form information each processed by the on-road processing facility (12) are transmitted via the road-to-vehicle communications facility (14) to the road-to-vehicle communications device (9) loaded on the vehicle; the road surface information, weather information, and road line form information are integrated with the information concerning a current position of the vehicle detected by the vehicle position detection sensor (8) and data on a running speed of the vehicle detected by the vehicle state detection sensor (4); an alarm is given to a driver of the vehicle at an alarm starting position when it is determined based on the various types of information above by the on-vehicle processing unit (5) that the vehicle may go out of the current lane; and then automatic control is provided, when the vehicle comes to the automatic control starting position so that the vehicle can be returned to a proper running reference position.

2. The lane hogging prevention system (1a) according to Claim 1 for transacting informational signals with the on-road facilities within a service area between the position detection support facility for service-in (11a) installed on a straight road at a position away by a specified distance from an entrance of a dangerous section and the position detection support facility for service-out (11b) at a point near the entrance of the dangerous section so that a vehicle running on a road having dangerous sections can continue to run maintaining a safety velocity in the dangerous section, wherein the on-vehicle device (15) receives informational signals from the on-road facilities, computes the safety velocity required for running in the dangerous section and corresponding to performance of the vehicle, alerts the driver the computed safety velocity, gives an alarm with the alarm device (7), when the speed reduction rate effected by the driver is insufficient, asking the driver to reduce the velocity to the required safety velocity, and further automatically reduces the running speed with the on-vehicle control unit (6) when the speed reduction rate effected by the driver is still insufficient even after generation of the alarm, and provides automatic speed reduction controls to reduce the running speed of the vehicle to the safety velocity before entering the dangerous zone.

3. The lane hogging prevention system (1a) according to Claim 1, wherein said weather conditions detecting facility (10) is a detection facility for detecting weather conditions such as rainfall, snowfall, a wind velocity, and a wind direction, the detected weather information is transmitted at a specified cycle to the on-road processing facility, a running position of a vehicle at a substantially central position of a running lane is regarded as a reference position for running, a running position off from the reference position to a lane-partitioning line (white line) is regarded as an alarm starting position (L1), and a running position further closer to the lane-partitioning line (white line) than this alarm starting position is regarded as an automatic control starting position (L2).

**Patentansprüche**

1. Fahrzeugsteuerungssystem (la) **gekennzeichnet durch** ein Fahrzeug mit einem Fahrzeugpositionserfassungssensor (8), der auf dem Fahrzeug zum Erfassen einer Position des Fahrzeuges vorgesehen ist, ein Fahrzeugzustandserfassungssensor (4) zum Erfassen einer Fahrgeschwindigkeit, einer Fahrstrecke oder einer Yoke bzw. Schaltgabelrate des Fahrzeuges, eine fahrzeugeigene Verarbeitungseinheit (5) zum Verarbeiten der Informationen von jedem der Erfassungssensoren, eine fahrzeugeigene Regel- bzw. Steuereinheit (6) zum Kontrollieren einer Fahrgeschwindigkeit des Fahrzeuges und eines Lenkwinkels und eine Alarmvorrichtung (7) zum Abgeben eines Alarms an den Fahrer des Fahrzeuges und straßeneigene Einrichtungen mit einer Vielzahl von Positionserfassungsunterstützungseinrichtungen (11), die in einem spezifizierten Servicebereich vorgesehen sind, eine Straßenoberflächensituationserfassungseinrichtung (16) zum Erfassen einer Oberflächensituation einer Straße, eine Wetterbedingungenerfassungseinrichtung (10) zum Erfassen von Wetterbedingungen, eine straßeneigene Datenbank (13) zum Speichern von Straßenführungsforminformationen, wie Krümmungsdaten, die eine gekrümmte Form der Straße anzeigen, und eine Straße-zu-Fahrzeug-Kommunikationseinrichtung (14) zum Ausführen von Kommunikationen zwischen der straßeneigenen Verarbeitungseinrichtung und dem Fahrzeug, wobei der Fahrzeugpoaitionserfassungssensor (8) eine gegenwärtige Position des Fahrzeuges gemäß einem Signal von der Positionserfassungsunterstützungseinrichtung (11) erfaßt, wobei Straßenoberflächeninformationen, Wetterinformationen und Straßenführungsforminformationen jeweils **durch** die straßeneigenen Verarbeitungseinrichtungen (12) verarbeitet werden und über die Straße-zu-Fahrzeug-Kommunikationseinrichtung (14) zu der Straße-zu-Fahrzeug-Kommunikationsvorrichtung (9) auf dem Fahrzeug übertragen werden, wobei die Straßenoberflächeninformationen, Wetterinformationen und Straßenführungsforminformationen mit den Informationen betreffend eine gegenwärtige Position des Fahrzeuges, die **durch** den Fahrzeugpositionserfassungssensor (8) erfaßt werden, integriert bzw. verbunden werden, und Daten für eine Fahrgeschwindigkeit des Fahrzeuges **durch** den Fahrzeugzustandserfassungssensor (4) erfaßt werden, und wobei ein Alarm an einen Fahrer des Fahrzeuges bei einer Almarstartposition gegeben wird, wenn basierend auf den unterschiedlichen vorstehenden Typen von Informationen **durch** die fahrzeugeigene Verarbeitungseinheit (5) bestimmt ist, daß das Fahrzeug aus der gegenwärtigen Spur geraten kann, und dann eine automatische Kontrolle bereitgestellt wird, wenn das Fahrzeug zu der automatischen Kontrollstartposition kommt, so daß das Fahrzeug zu einer richtigen bzw. ordnungsgemäßen Fahrzeugbezugsposition zurückgebracht werden kann.

2. Fahrzeugsteuerungssystem (1a) nach Anspruch 1 zum Durchführen von Informationssignalen mit den straßeneigenen Einrichtungen innerhalb eines Servicebereichs zwischen der Positionserfassungsunterstützungseinrichtung für einen Ein-Service (11a), die auf einer geraden Straße bei einer Position in einem spezifizierten Abstand von einer Einfahrt eines gefährlichen Abschnitts entfernt angebracht ist und die Positionserfassungsunterstützungseinrichtung für einen Aus-Service (11b) an einem Punkt nahe der Einfahrt des gefährlichen Abschnitts angebracht ist, so daß ein Fahrzeug, das auf einer Straße mit gefährlichen Abschnitten fährt, fortlaufend fahren kann und dabei eine sichere Geschwindigkeit in dem gefährlichen Abschnitt hält, wobei die fahrzeugeigene Vorrichtung (15) Informationssignale von den straßeneigenen Einrichtungen empfängt, die sichere Geschwindigkeit, die zum Fahren in dem gefährlichen Abschnitt erforderlich ist, berechnet und entsprechend der Ausstattung bzw. dem Leistungsvermögen des Fahrzeuges den Fahrer auf die berechnete sichere Geschwindigkeit aufmerksam macht, einen Alarm mit der Alarmvorrichtung (7) gibt, wenn die durch den Fahrer bewirkte Geschwindigkeitsverringungsrate unzureichend ist und dabei den Fahrer auffordert, die Geschwindigkeit zu der erforderlichen sicheren Geschwindigkeit zu verringern und weiterhin automatisch die Fahrgeschwindigkeit mit der fahrzeugeigenen Steuereinheit (6) verringert, wenn die Geschwindigkeitsverringerungsrate, die durch den Fahrer bewirkt wird, immer noch unzureichend ist selbst nach der Erzeugung des Alarms und automatische Geschwindigkeitsverringerungskontrollen bereitstellt, um die Fahrgeschwindigkeit auf die sichere Geschwindigkeit zu verringern, bevor dieses in die gefährliche Zone eintritt.

3. Fahrzeugsteuerungssystem (1a) nach Anspruch 1, bei dem die Wetterbedingungenerfassungseinrichtung (10) eine Erfassungseinrichtung zum Erfassen von Wetterbedingungen ist, wie Regenfall, Schneefall, eine Windgeschwindigkeit und eine Windrichtung, wobei die erfaßten Wetterinformationen mit einem spezifizierten Zyklus zu der straßeneigenen Verarbeitungseinrichtung übertragen werden, eine Fahrposition eines Fahrzeuges bei einer im wesentlichen zentralen Position einer Fahrspur als eine Bezugsposition für die Fahrt betrachtet wird, eine Fahrposition entfernt von der Bezugsposition zu einer Fahrspurunterteilungslinie (weiße Linie) als eine Alarmstartposition (21) betrachtet wird und eine Fahrposition weiter näher zu der Fahrspurunterteilungslinie (weiße Linie) als diese Alarmstartposition als eine automatische Kontrollstartposition (22) betrachtet wird.

**Revendications**

1. Système de prévention d'empiétement de voie (1a), **caractérisé en ce qu'**il comprend un véhicule ayant un détecteur (8) de position de véhicule monté sur le véhicule pour détecter une position du véhicule, un détecteur (4) d'état de véhicule pour détecter une vitesse de déplacement, une distance parcourue ou un rapport de transmission du véhicule, une unité de traitement (5) embarquée sur le véhicule pour traiter les informations provenant de chacun des détecteurs, une unité de commande (6) embarquée sur le véhicule pour commander une vitesse de déplacement du véhicule et un angle de direction, et un dispositif d'alarme (7) pour alerter un conducteur du véhicule ; et des moyens intégrés à la route, incluant une pluralité de moyens (11) de support de détection de position prévus dans une zone de service spécifiée, un moyen (16) de détection de situation de surface de route pour détecter une situation de surface d'une route, un moyen (10) de détection de conditions climatiques pour détecter des conditions climatiques, une base de données de route (13) pour le stockage d'informations de forme de route telles que des données de courbure indiquant une forme courbe de la route, et un moyen (14) de communication de la route au véhicule pour effectuer des communications entre le dispositif de traitement sur route et le véhicule, dans lequel le détecteur de position de véhicule (8) détecte une position existante du véhicule conformément à un signal fourni par le moyen de support de détection de position (11) ; une information de surface de route, une information climatique et une information de forme de route, traitées chacune par le dispositif de traitement sur route (12), sont transmises via le moyen de communication de la route au véhicule (14) au dispositif de communication de la route au véhicule (9) chargé sur le véhicule ; l'information de surface de route, l'information climatique et l'information de forme de route sont intégrées à l'information concernant une position existante du véhicule détectée par le détecteur de position de véhicule (8) et aux données concernant une vitesse de déplacement du véhicule détectée par le détecteur d'état de véhicule (4) ; une alarme est signalée à un conducteur du véhicule, à une position de début d'alarme, lorsque l'unité de traitement embarquée (5) détermine, sur la base des divers types d'information ci-dessus, que le véhicule risque de sortir de la voie suivie ; et une commande automatique agit ensuite, lorsque le véhicule arrive à la position de début de commande automatique, de sorte que le véhicule peut être ramené à une position de référence de déplacement correct.

2. Système de prévention d'empiètement de voie (1a) selon la revendication 1, pour la communication de signaux d'information avec les moyens placés sur route dans une zone de service définie entre le moyen de support de détection de position pour entrée de service (11a) installé sur une route droite à une position éloignée, d'une distance spécifiée, d'une entrée d'une section dangereuse et le moyen de support de détection de position pour sortie de service (11b) installé à un point proche de l'entrée de la section dangereuse, de sorte qu'un véhicule qui se déplace sur une route ayant des sections dangereuses peut continuer à rouler en conservant une vitesse de sécurité dans la section dangereuse, dans lequel le dispositif embarqué (15) reçoit des signaux d'information venant des moyens sur route, il calcule la vitesse de sécurité requise pour la conduite dans la section dangereuse et correspondant aux caractéristiques du véhicule, il indique au conducteur la vitesse de sécurité calculée, il émet une alarme au moyen du dispositif d'alarme (7) lorsque le taux de réduction de vitesse effectué par le conducteur est insuffisant, pour demander au conducteur de réduire la vitesse à la vitesse de sécurité requise, et il réduit en outre la vitesse de déplacement à l'aide de l'unité de commande embarquée (6) lorsque le taux de réduction de vitesse effectué par le conducteur est encore insuffisant même après l'émission de l'alarme, et il exécute des commandes automatiques de réduction de vitesse pour réduire la vitesse de déplacement du véhicule à la vitesse de sécurité avant d'atteindre la zone dangereuse.

3. Système de prévention d'empiétement de voie (1a) selon la revendication 1, dans lequel le dit moyen de détection des conditions climatiques (10) est un moyen de détection pour détecter des conditions climatiques telles que chute de pluie, chute de neige, vitesse du vent et direction du vent ; les informations climatiques détectées sont transmises, à un cycle spécifié, au moyen de traitement sur route ; une position de déplacement d'un véhicule sensiblement au centre d'une voie de circulation est prise comme position de référence pour le déplacement ; une position de déplacement hors de la position de référence vers une ligne de séparation des voies (ligne blanche) est prise comme position de début d'alarme (L1) ; et une position de déplacement plus proche de la ligne de séparation des voies (ligne blanche) que cette position de début d'alarme est prise comme position de début de commande automatique (L2).

# FIG. 1

ROAD SURFACE

WEATHER

11

16

10

ON-ROAD
SENSORS

POSITION
DETECTION
SUPPORT
FACILITY

ROAD
SURFACE
SITUATION
DETECTION
FACILITY

WEATHER
CONDITIONS
DETECTION
FACILITY

ROAD
SURFACE
SITUATION

WEATHER
INFORMATION

13

ON-ROAD
PROCESSING
FACILITY

ON-ROAD DATABASE,
ROAD LINE FORM
INFORMATION

WEATHER INFORMATION,
ROAD LINE FORM INFORMATION

ON-ROAD
FACILITIES

14

ROAD-TO-VEHICLE
COMMUNICATION

ROAD SURFACE
INFORMATION

WEATHER INFORMATION,
ROAD LINE FORM INFORMATION

2

1a

AHS
CAR

8

9

4

VEHICLE POSITION
DETECTION SENSOR

ROAD-TO-VEHICLE
COMMUNICATIONS
DEVICE

VEHICLE STATE
DETECTION SENSOR

5

ON-VEHICLE
PROCESSING UNIT

ON-VEHICLE
CONTROL UNIT

6

15 ON-VEHICLE
DEVICE

VEHICLE HMI

7

15

# FIG. 2

SERVICE AREA

LANE $Y_1$

CONTROL-TERMINATED DISTANCE $L_3$

CONTROL-STARTED DISTANCE $L_2$

ALARM-STARTED DISTANCE $L_1$

BOUNDARY OF LANE

$Y_2$

11

11

AHS CAR

$P_2$

$P_1$

11b POSITION DETECTION SUPPORT FACILITY (FOR SERVICE-OUT)

11 POSITION DETECTION SUPPORT FACILITY (FOR DETECTION OF A POSITION)

11a POSITION DETECTION SUPPORT FACILITY (FOR SERVICE-IN)

WEATHER INFORMATION ROAD LINE FORM INFORMATION 14

12

WEATHER INFORMATION ROAD LINE FORM INFORMATION 14

| ROAD-TO-VEHICLE COMMUNICATIONS FACILITY | ON-ROAD PROCESSING FACILITY | ROAD-TO-VEHICLE COMMUNICATIONS FACILITY |

EP 1 104 881 B1

# FIG. 3

ROAD ← | → AHS CAR

P₂ |←——→| P₁

THE AHS CAR ENTERED A SERVICE AREA.

S1

POSITION DETECTION SUPPORT FACILITY (FOR SERVICE-IN) → THE VEHICLE RECOGNIZED THAT THE LANE HOGGING PREVENTION CONTROL SERVICE IS AVAILABLE, AND THE SERVICE IS STARTED.

S2

INFORMATION FROM THE ON-ROAD FACILITIES (WEATHER INFORMATION, ROAD LINE FORM INFORMATION) → INFORMATION FROM THE ON-ROAD FACILITIES (WEATHER INFORMATION, ROAD LINE FORM INFORMATION) IS ACQUIRED WITH THE ROAD-TO-VEHICLE COMMUNICATIONS FACILITY.

S3

POSITION DETECTION SUPPORT FACILITY (FOR DETECTION OF A POSITION) → A CURRENT POSITION OF THE VEHICLE IS DETECTED BY THE VEHICLE POSITION DETECTION SUPPORT FACILITY (FOR DETECTION OF A POSITION).

S4

DETERMINATION ON THE POSSIBILITY OF LANE HOGGING POSSIBILITY OF LANE HOGGING IS DETERMINED BASED ON SUCH DATA, AS A RUNNING SPEED AND A CURRENT POSITION OF THE VEHICLE.

S5

WHEN IT IS DETERMINED THAT THERE IS THE POSSIBILITY OF LANE HOGGING, AN ALARM (BUZZER) IS GIVEN TO THE DRIVER.

ALARM L₁

S6

WHEN THE DRIVER HAS NO INTENTION TO CONTROL THE VEHICLE AND IT IS DETERMINED THAT THERE IS THE POSSIBILITY OF LANE HOGGING, STEERING CONTROL IS AUTOMATICALLY PROVIDED.

STEERING CONTROL L₂

S7

WHEN THE POSSIBILITY OF LANE HOGGING DISAPPEARS, THE CONTROL IS TERMINATED.

L₃

HAS THE AHS CAR REACHED THE POSITION DETECTION SUPPORT FACILITY (FOR SERVICE-OUT)? → ◇ NOT YET

↓ YES  S8

POSITION DETECTION SUPPORT FACILITY (FOR SERVICE-OUT) → THE LANE HOGGING PREVENTION CONTROL SERVICE IS TERMINATED.

# FIG. 4

(A)

POSITION DETECTION SUPPORT FACILITY   CENTER OF
(FOR DETECTION OF A POSITION)              A LANE

$T_0$

START OF
MODIFICATION
OF STEERING
BY THE DRIVER

A : TRAIL ACCORDING TO MODIFIED STEERING
BY A DRIVER

$\theta$

$L_1$

LANE BOUNDARY

(B)

START OF
MODIFICATION
OF STEERING
BY THE SYSTEM

B : TRAIL ACCORDING TO MODIFIED STEERING
BY THE SYSTEM

$L_2$

LANE BOUNDARY

EP 1 104 881 B1

# FIG. 5

CURVATURE RADIUS BETWEEN TWO POINTS

CURVATURE RADIUS CHANGE POINT

# FIG. 6

INTERRUPTION DUE TO CHANGE IN STATE

START

WEATHER INFORMATION AND TIME DATA ARE STORED.

ON-ROAD DATABASE

END

# FIG. 7

DATA INPUT CYCLE AND PROCESSING CYCLE

TIMING FOR WEATHER INFORMATION TRANSMISSION

A : PROCESSING OF WEATHER INFORMATION

| WEATHER CONDITIONS DETECTION FACILITY | INPUT CYCLE 60s |
| ON-ROAD PROCESSING FACILITY | PROCESSING CYCLE 60s |
| ROAD-TO-VEHICLE COMMUNICATIONS FACILITY | 0.1s |

60s

TIME

A

60s

TIME

A

PROCESSING    0.1s

PROCESSING

TIME

AHS CAR

AHS CAR

EP 1 104 881 B1

# FIG. 8

500m

WEATHER CONDITIONS
DETECTION FACILITY

# FIG. 9

11b POSITION DETECTION
SUPPORT FACILITY
(FOR SERVICE-OUT)

11a POSITION DETECTION
SUPPORT FACILITY
(FOR SERVICE-IN)

SERVICE AREA

SERVICE-OUT

SERVICE-IN

# FIG. 10

11 POSITION DETECTION
FACILITY(COMMON TO UP AND DOWN WAYS)
(FOR DETECTION OF A POSITION)

AT A SPACE OF 2m

POSITION DETECTION FACILITY
(FOR DETECTION OF A POSITION)

# FIG. 11

ROAD-TO-VEHICLE
COMMUNICATIONS FACILITY

30m

1km (1 ZONE)

COMMUNICATION RANGE

# FIG. 12

16 ROAD SURFACE SITUATION
DETECTION FACILITY

13 ON-ROAD DATABASE

ON-ROAD 12
PROCESSING
FACILITY

RANGE OF MANAGEMENT BY ONE ON-ROAD
PROCESSING FACILITY (10km)

14 ROAD-TO-VEHICLE
COMMUNICATIONS FACILITY

30m

500m

FIRST ZONE (1km)    SECOND ZONE · · · 10-TH ZONE

10 WEATHER CONDITIONS
DETECTION FACILITY

ON-ROAD FACILITIES AND A RANGE
OF MANAGEMENT THEREBY

22

EP 1 104 881 B1

# FIG. 13

ON-ROAD SENSORS

19a,19b

POSITION DETECTION SUPPORT FACILITY

ROAD SURFACE

ROAD SURFACE SITUATION DETECTION FACILITY — 16

12a

ROAD SURFACE SITUATION

ON-ROAD PROCESSING FACILITY

13

ON-ROAD DATABASE

ROAD SURFACE SITUATION ROAD LINE FORM

14 — ROAD-TO-VEHICLE COMMUNICATIONS

ON-ROAD FACILITIES

ROAD SURFACE SITUATION ROAD LINE FORM

2    1b

AHS CAR

8
VEHICLE POSITION DETECTION SENSOR

9
ROAD-TO-VEHICLE COMMUNICATIONS DEVICE

18
VEHICLE STATE DETECTION SENSOR

5 — ON-VEHICLE PROCESSING UNIT

ON-VEHICLE CONTROL UNIT

6

VEHICLE HMI — 7

15 ON-VEHICLE DEVICE

23

# FIG. 14

ENTRANCE TO A CURVED SECTION

POSITION FOR GIVING AN ALARM AND STARTING SPEED REDUCTION

22

23 SERVICE AREA

AHS CAR

21  P3  19b POSITION DETECTION SUPPORT FACILITY (FOR SERVICE-OUT)

P2  INFORMATION PROVISION ZONE  P1

19a POSITION DETECTION SUPPORT FACILITY (FOR SERVICE-IN)

ROAD SURFACE SITUATION, ROAD LINE FORM ONCE FOR 0.5 SECOND

12a  ON-ROAD PROCESSING FACILITY → ROAD-TO-VEHICLE COMMUNICATIONS FACILITY  14

EP 1 104 881 B1

# FIG. 15

RUNNING SPEED OF A VEHICLE

START OF BRAKING BY THE ON-VEHICLE DEVICE

ALARM

CURVE $A_N$ INDICATING SPEED REDUCTION WHEN SUDDENLY BRAKED BY THE DRIVER

80 [km/h]

CURVE $A_1$ INDICATING NORMAL SPEED REDUCTION BY A DRIVER

B : CURVE INDICATING SPEED REDUCTION BY THE ON-VEHICLE DEVICE

SAFETY VELOCITY

POSITION

$L_A$

$P_A$

ENTRANCE TO A CURVED SECTION

EP 1 104 881 B1

# FIG. 16

ROAD ⟵──────⟶ AHS CAR

ENTRANCE OF A
CURVED
SECTION
P₃

SERVICE AREA
⟵ P₁

THE AHS CAR ENTERES
A SERVICE AREA.

**19a**

POSITION DETECTION
SUPPORT FACILITY

THE AHS CAR DETECTS ITS CURRENT
POSITION BY CHECKING A REFERENCE
POINT MARKER, AND RECOGNIZES THAT
THE SAFETY VELOCITY MAINTENANCE
CONTROL SERVICE IS STARTED.

**19a** POSITION DETECTION
SUPPORT FACILITY

THE DRIVER GRASPS THE
DISTANCE UP TO AN ENTRANCE
OF THE CURVED SECTION.

INFORMATION FROM THE
ROAD (ROAD SURFACE
SITUATION, ROAD LINE
FORM)

INFORMATION FROM THE ON-ROAD
FACILITIES (SUCH AS INFORMATION ON
ROAD SURFACE SITUATIONS, CURVING
OF THE ROAD) IS OBTAINED.

**2**

INFORMATION
PROVISION ZONE

WHEATHER THE CURRENT VELOCITY
IS OVER THE SAFETY VELOCITY
FOR THE CURVED SECTION IS
DETERMINED.

THE DRIVER IS ALERTED THAT
THE CURRENT RUNNING SPEED IS
OVER THE SAFETY VELOCITY.

WHEN IT IS DETERMINED THAT SPEED
CANNOT BE REDUCED TO THE SAFETY
VELOCITY BEFORE ENTERING THE
ENTRANCE OF THE CURVED SECTION,
AUTOMATIC CONTROL IS PROVIDED
FOR SPEED REDUCTION.

START OF SPEED
REDUCTION

THE RUNNING SPEED IS REDUCED
TO THE SAFETY VELOCITY.

**19b**

POSITION DETECTION
SUPPORT FACILITY

PROVISION OF SERVICE IS
TERMINATED WHEN THE AHS CAR
PASSES OVER THE POSITION
DETECTION SUPPORT FACILITY
FOR SERVICE-OUT.

SPEED REDUCTION TO THE SAFETY
VELOCITY

POSITION DETECTION SUPPORT FACILITY
(FOR SERVICE-OUT)

26

# FIG. 17

ROAD SURFACE SITUATION (DATA INPUT CYCLE:60s)

60s

TIME

TIMING FOR PROCESSING SUCH AS PREPARATION OF OUTPUT DATA

ON-ROAD PROCESSING FACILITY (PROCESSING TIME:0.5s)

B | A     B     B | A

TIME

A: PROCESSING OF ROAD SURFACE SITUATION INFORMATION
B: PROCESSING OF PREPARATION OF OUTPUT DATA

0.5s

ROAD-TO-VEHICLE COMMUNICATIONS FACILITY (DATA OUTPUT CYCLE:0.5s)

PRO-CESSING     PRO-CESSING     PRO-CESSING

TIME

0.5s

AHS CAR          AHS CAR          AHS CAR

EP 1 104 881 B1

# FIG. 18

```
┌─────────┐     ONCE FOR EVERY 60 SECONDS        13
│  START  │
└─────────┘
     │
     ▼
┌──────────────────────┐                    ┌──────────────────┐
│ DATA ON ROAD SURFACE │                    │    ON-ROAD       │
│ CONDITIONS, THE      │                    │    DATABASE      │
│ POSITION, AND TIMING │ ─────────────────▶ │  ┌────────────┐  │
│ OF CHANGE IS STORED. │                    │  │  STORED    │  │
└──────────────────────┘                    │  │  DATA      │  │
     │                                       │  └────────────┘  │
     ▼                                       └──────────────────┘
┌─────────┐
│   END   │
└─────────┘
```

# FIG. 19

```
┌─────────┐  ONCE FOR EVERY 0.5 SECOND          13
│  START  │
└─────────┘
     │
     ▼
┌──────────────────────────────────┐          ┌──────────────────┐
│ SELECTION OF A LANE (UP/DOWN)    │          │    ON-ROAD       │
└──────────────────────────────────┘          │    DATABASE      │
     │                                          │                  │
     ▼                                          │  ┌────────────┐  │
┌──────────────────────────────────┐           │  │  STORED    │  │
│ PROCESSING FOR PREPARATION OF     │ ◀─────────│  │  DATA      │  │
│ OUTPUT DATA                       │           │  └────────────┘  │
│ ·ROAD LINE FORM                   │           │  ┌────────────┐  │
│ ·ROAD SURFACE CONDITIONS IN EACH  │ ─────────▶│  │  OUTPUT    │  │
│ SECTION AND THE POSITION          │           │  │  DATA      │  │
│ · (PREPARATION OF DATA FOR        │           │  └────────────┘  │
│ INFORMATION DISPLAY UNIT)         │           └──────────────────┘
└──────────────────────────────────┘                    ┊
     │                                                   ▼
     ▼                                              AHS CAR
   ╱─────────────╲                            TO THE INFORMATION
N ╱  INFOR-       ╲                            DISPLATY FACILITY
◀─╲ MATION FOR     ╱
   ╲ EACH OF UP   ╱
   ╲ AND DOWN    ╱
    ╲ LANES      ╱
    ╲PROCESSED? ╱
      ╲────────╱
         │ Y
         ▼
    ┌─────────┐
    │   END   │
    └─────────┘
```

# FIG. 20

INFORMATION PROVISION ZONE (20m)

268m

19b POSITION DETECTION
SUPPORT FACILITY

16 ROAD SURFACE
SITUATION
DETECTION FACILITY

12a ON-ROAD
PROCESSING
FACILITY

13 ON-ROAD
DATABASE

BROADCASTING

19a

# FIG. 21

INFORMATION PROVISION ZONE (20m)

509m

19b POSITION DETECTION
SUPPORT FACILITY

16 ROAD SURFACE
SITUATION
DETECTION FACILITY

12a ON-ROAD
PROCESSING
UNIT

13 ON-ROAD
DATABASE

BROADCASTING

19a

# FIG. 22

WHITE LINE

CCD CAMERA

VEHICLE STATE DETECTION SENSOR — 4

3

ON-VEHICLE PROCESSING UNIT

5

ON-VEHICLE CONTROL UNIT — 6

HMI FOR VEHICLE

7

AHS CAR

2

1